# EUROPÄISCHE PATENTSCHRIFT

(11) **EP 1 915 248 B1**
(45) Veröffentlichungstag und Bekanntmachung des Hinweises auf die Patenterteilung: **22.03.2017**
(21) Anmeldenummer: 06776597.4
(22) Anmeldetag: 03.08.2006
(51) Int. Cl.: B29C 47/88

(54) **VERFAHREN UND VORRICHTUNG ZUR EXTRUSION VON SCHLAUCHFOLIE**
METHOD AND DEVICE FOR THE EXTRUSION OF TUBULAR FILMS
PROCEDE ET DISPOSITIF D'EXTRUSION D'UNE PELLICULE TUBULAIRE

(30) Priorität: 15.08.2005 DE 102005038731
(43) Veröffentlichungstag der Anmeldung: 30.04.2008
(73) Patentinhaber: Windmöller & Hölscher KG, 49525 Lengerich/Westf. (DE)
(72) Erfinder: BACKMANN, Martin, 49525 Lengerich (DE)
(86) Internationale Anmeldenummer: PCT/EP2006/007719
(87) Internationale Veröffentlichungsnummer: WO 2007/019969

(56) Entgegenhaltungen:
- EP-A2- 0 285 368
- WO-A1-2006/117578
- JP-A- 54 036 373
- JP-A- 58 179 620
- US-A- 3 170 011
- US-A- 3 541 191
- US-A- 3 810 725
- US-A- 4 265 853
- US-A- 4 287 151

## Beschreibung

Die Erfindung betrifft eine Extrusionsvorrichtung zur Extrusion eines Folienschlauches nach dem Oberbegriff des Anspruchs 1 sowie ein Verfahren zur Extrusion eines Folienschlauches nach dem Oberbegriff des Anspruchs 14.

Folienschläuche werden in Extrusionsvorrichtungen produziert, wie sie beispielsweise aus der Patentschrift DE 100 48 862 C1 der Anmelderin bekannt sind. Dort ist ein Düsenkopf gezeigt, dem über schmelzezuführende Leitungen Kunststoffschmelze zugeführt wird, welche innerhalb des Düsenkopfes ringförmig verteilt wird. Von den schmelzezuführenden Leitungen ausgehend wird die Schmelze in Transportrichtung z durch einen ringförmigen Spalt gedrückt. Daran anschließend verfestigt sich die ringförmige Schmelze zu einem Folienschlauch, der zunächst weiter in Transportrichtung z transportiert wird.

Die Eigenschaften der Folienschläuche, etwa die optischen und die mechanischen Eigenschaften wie beispielsweise die Transparenz oder die Festigkeit bei gegebener Foliendicke, hängen sehr stark davon ab, wie schnell die Folie nach dem Austritt aus dem ringförmigen Spalt des Düsenkopfes unter die so genannte Frostlinie abgekühlt wird.

Auch die geometrischen Eigenschaften, etwa die Foliendicke oder der Durchmesser des Folienschlauches, hängen von der Abkühlgeschwindigkeit ab. Bei Versuchen, den Durchsatz durch den Düsenkopf, also die Produktionsgeschwindigkeit zu erhöhen, wurde beobachtet, dass der Folienschlauch nach dem Austritt aus dem Düsenspalt noch nicht ausreichend verfestigt, so dass dieser Walkbewegungen ausführt, die zu einer Variation des Folienschlauchdurchmessers beziehungsweise der Foliendicke führt.

In der Vergangenheit wurden viele Anstrengungen unternommen, um einen Folienschlauch, der gerade aus dem Ringspalt ausgetreten ist, schnell abzukühlen. Zur Abkühlung des Folienschlauches wurden in der Vergangenheit regelmäßig Extrusionsvorrichtungen vorgeschlagen, bei denen über Rohrleitungen dem Inneren des Folienschlauches Luft oder andere gasförmige Fluide zugeführt und aus dem Inneren wieder abgeführt wurden. Die notwendigen Leitungen führen, wie in der DE 100 48 862 C1 dargestellt, durch den Düsenkopf. Neben der Abkühlung hat die Luft auch die Aufgabe, den Folienschlauch von innen her zu recken. Dazu wird die Luft im Inneren des Folienschlauches mit Druck beaufschlagt.

Als nachteilig erweist sich allerdings, dass es mit den Extrusionsvorrichtungen des Standes der Technik nicht möglich ist, den Folienschlauch gezielt mit einem kalten Fluid derart zu beaufschlagen, dass zufriedenstellende Abkühlgeschwindigkeiten erreicht werden.

Die nachveröffentlichte WO 2006/117578 A1 zeigt einen innerhalb des Folienschlauches rotierbaren Körper, der Wärme vom Folienschlauch abführen kann. Allerdings ist zum Antrieb dieses Körpers ein Elektromotor vorgesehen, der selbst Wärme produzieren dürfte und somit den Bemühungen zum Abkühlen zuwider laufen dürfte.

Die Aufgabe der vorliegenden Erfindung ist es daher, eine Extrusionsvorrichtung und ein Verfahren vorzuschlagen, mit denen sich ein Folienschlauch effektiver und damit schneller abkühlen lässt.

Erfindungsgemäß wird diese Aufgabe durch die Merkmale der kennzeichnenden Teile der Ansprüche 1 und 14 gelöst. Demnach ist das Kühlelement (4) Bestandteil eines Rotors (9), welcher um einen Stator (10) rotiert, wobei der Rotor (9) berührungsfrei um den Stator (10) führbar ist, der Rotor (9) durch den Stator (10) über magnetische Kräfte führbar und antreibbar ist.

Dadurch, dass das Kühlelement bewegt wird, haftet an seiner Oberfläche oder seinen Oberflächen eine laminare Strömung an. Durch diese laminare Strömung wird verhindert, dass sich, wenn sich der Folienschlauch dem Kühlelement nähert, der Folienschlauch oder Teile davon und das Kühlelement berühren. Der Folienschlauch wird also von einem durch das sich bewegende Kühlelement hervorgerufene Luftpolster getragen. Da in diesem Fall der Folienschlauch an dem Kühlelement mit einem sehr geringen Abstand vorbeigeführt wird, bis hinunter zu wenigen Zehnteln Millimeter, verbleibt zwischen Folienschlauch und Kühlelement nur noch eine geringe Menge an Fluid. Diese geringe Menge an Fluid kann jedoch Wärme sehr schnell transportieren, so dass sich die Temperaturen von Folienschlauch und Kühlelement sehr schnell angleichen. Die vom Kühlelement aufgenommene Wärme kann über das durch den Düsenkopf abgeführte Fluid abgeführt werden. Dazu kann das Kühlelement eine große Oberfläche, beispielsweise in Form von Kühlrippen, aufweisen. Auf diese Weise kann nun der Folienschlauch schneller abgekühlt werden als es mit Vorrichtungen des Standes der Technik möglich ist. Die Effektivität des Abkühlens lässt sich nochmals steigern, wenn das Kühlelement auch eine große Oberfläche aufweist, an welcher die Folie entlang geführt wird. Dazu ist vorgesehen, dass das Kühlelement die gleiche Querschnittsform wie der Folienschlauch aufweist. Dies ist insbesondere dann von Bedeutung, wenn das Kühlelement in einem Bereich angeordnet ist, in dem der Folienschlauch gereckt wird, also in seiner Transportrichtung z in seinem Durchmesser verändert wird. Das Kühlelement hat also eine Form, die an die Form des Folienschlauches angepasst ist. Umgekehrt kann aber auch das Kühlelement dazu benutzt werden, die Form des Folienschlauches zu beeinflussen. Durch die Führung der Folie entlang der Oberfläche des bewegten Kühlelementes wird der Folienschlauch aufgrund des Luftpolsters auf konstantem Abstand gehalten. Damit kann, eine entsprechende Formgebung des Kühlelementes vorausgesetzt, der Folienschlauch gereckt werden. Diese Eigenschaft kann aber auch dazu ausgenutzt werden, den Folienschlauch sicher zu führen. Zur Führung von Folienschläuchen wurde bislang der Schlauch mit Blasluft beaufschlagt, wobei ein derart geführter Folienschlauch häufig zum Flattern neigt. Dadurch ist nicht gewährleistet, dass der Folienschlauch unverändert bleibt. So kann sich beispielsweise unbeabsichtigerweise sein Durchmesser und/oder seine Dicke verändern.

In einer vorteilhaften Ausgestaltung der Extrusionsvorrichtung weist das Kühlelement eine rotationssymmetrische Form, beispielsweise eine zylinderförmige Form, auf. Insbesondere kann das Kühlelement eine Scheibe sein, an deren Mantelfläche der Folienschlauch entlang geführt wird.

In einer vorteilhaften Ausgestaltung der Erfindung ist das Kühlelement temperierbar, es kann also gekühlt oder auch erwärmt werden. Auf diese Weise überträgt sich die aus dem Kühlelement abgezogene oder hinzugegebene Wärme sehr schnell auf den Folienschlauch. Durch diese Maßnahme kann die Abkühlgeschwindigkeit des Folienschlauches nochmals deutlich erhöht werden. Dazu kann das Kühlelement mit inneren Leitungen versehen sein, durch die Kühlflüssigkeit geleitet werden kann.

Versuche haben gezeigt, dass die laminare Strömung oder die laminare Schicht auf oder an dem Kühlelement und damit das den Folienschlauch tragende Luftpolster umso stabiler ist, je glatter die betreffende Oberfläche ist. Daher ist es bevorzugt, die Oberfläche, welcher der Kühlung des Folienschlauches und/oder dessen Führung dient, mit einem Chromüberzug zu versehen. Auch andere Maßnahmen zur Glättung der betreffenden Oberfläche, etwa eine mechanische oder chemische Behandlung, sind denkbar. Insgesamt ist es vorteilhaft, wenn die Rautiefe auf der Oberfläche 0,5 Mikrometer, insbesondere 0,2 Mikrometer, nicht überschreitet.

Das Kühlelement muss durch äußere Kräfte in Bewegung versetzt werden. Dieses kann durch einen Antriebsmotor, beispielsweise durch einen Elektromotor, erfolgen. Ein solcher Motor kann mit seiner Welle ein Antriebsdrehmoment auf das Kühlelement übertragen. Jedoch kann in einer bevorzugten Ausführungsform das Kühlelement auch Bestandteil eines Rotors sein, welcher um ein feststehendes Bauteil eines Antriebsmotors, bei Elektromaschinen also um den Stator, herum führbar ist. Zwischen Rotor und feststehendem Bauteil kann es eine mechanische Lagerung, aber auch eine berührungsfreie Lagerung geben. In letzterem Fall wird der Rotor bevorzugt durch magnetische Kräfte in einer statischen Position gehalten.

In weiterer Ausgestaltung der Erfindung ist das Kühlelement derart angelenkt, dass das gasförmige Fluid in Transportrichtung des Folienschlauches am Kühlelement vorbei förderbar ist. Dies ist besonders dann von Vorteil, wenn das Fluid auch in Transportrichtung des Folienschlauches jenseits des Kühlelements eine zusätzliche Kühlwirkung entfalten soll. Dazu kann beispielsweise das Kühlelement mit Streben oder Speichen mit der Welle des Antriebsmotors verbunden sein. Wird das Kühlelement um ein feststehendes Bauteil herum geführt, so kann dieses feststehende Bauteil, also beispielsweise der Stator eines Elektromotors, Durchgänge, Durchbrüche oder ähnliches aufweisen.

In einer weiteren vorteilhaften Ausgestaltung der Erfindung ist in Transportrichtung des Folienschlauches auf Höhe des Kühlelements eine weitere Temperiervorrichtung vorgesehen. Diese Temperiervorrichtung kann auf dem gleichen Wirkprinzip beruhen wie die Kühlvorrichtung der erfindungsgemäßen Extrusionsvorrichtung, mit welcher der extrudierte Folienschlauch von innen her kühlbar ist. Allerdings kann die Temperiervorrichtung das Äußere des Folienschlauches auch mit einem Fluid beaufschlagen, beispielsweise mit Blasluft, wobei dieses Fluid temperierbar ist, um auf diese Weise die Außenoberfläche des Folienschlauches temperieren zu können. Bei dieser Anordnung ist es möglich, den Folienschlauch mit einem sehr starken Fluidstrom zu beaufschlagen, da der Folienschlauch durch das sich bewegende Kühlelement und dem auf diese Weise erzeugte Luftpolster geführt wird. Aus diesem Grunde ist es auch möglich, den Fluidstrom zu variieren, ohne die geometrischen Eigenschaften des Folienschlauches negativ zu beeinflussen. Auf diese Weise kann nochmals sowohl die Abkühlung des Folienschlauches effektiver gestaltet als auch die Führung des Folienschlauches verbessert werden.

Weitere Ausführungsbeispiele der Erfindung gehen aus der gegenständlichen Beschreibung und den Ansprüchen hervor.
Die einzelnen Figuren zeigen:
- Fig. 1: Seitenansicht einer ersten Ausführungsform einer erfindungsgemäßen Extrusionsvorrichtung
- Fig. 2: Seitenansicht einer zweiten Ausführungsform einer erfindungsgemäßen Extrusionsvorrichtung
- Fig. 3: Detailansicht eines Kühlelements

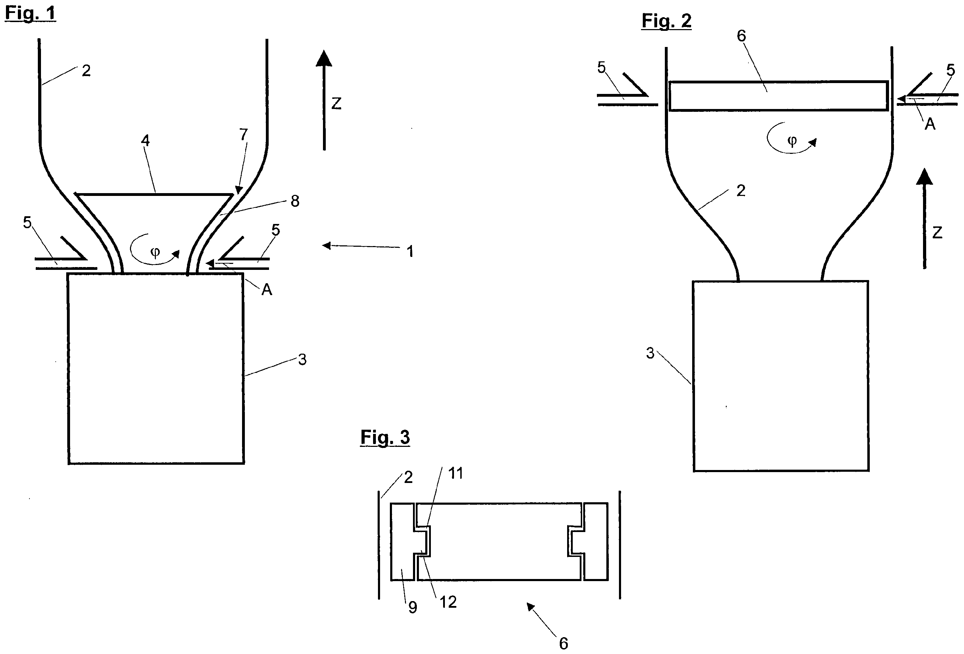

Fig. 1 zeigt eine schematische Darstellung einer erfindungsgemäßen Extrusionsvorrichtung 1 in der Seitenansicht. Auf den Aufbau und die Wirkungsweise des Düsenkopfes 3 wurde bereits in der einleitenden Beschreibung kurz eingegangen. Zur näheren Erläuterung wird auf frühere Patente oder Patentanmeldungen verwiesen, beispielsweise auf die DE 100 48 862 C1. Der Düsenkopf 3 weist einen in dieser Ansicht nicht sichtbaren ringförmigen Spalt auf, durch den die Kunststoffschmelze aus dem Düsenkopf austritt und unmittelbar beginnt, sich abzukühlen, da die Umgebungsluft gewöhnlich kälter im Vergleich zu den im Düsenkopf herrschenden Temperaturen ist. Dadurch verfestigt sich die Schmelze und bildet anschließend einen Folienschlauch 2. Um die Abkühlung der Schmelze beziehungsweise des Folienschlauches 2 zu beschleunigen, ist in Transportrichtung z des Folienschlauches 2 unmittelbar hinter dem Düsenkopf 3 ein Kühlelement 4 angeordnet. Dieses Kühlelement 4 ist in Drehrichtung ϕ drehbar. Die Drehachse fluchtet mit der Symmetrieachse des Folienschlauches. Durch eine ausreichend schnelle Drehung des Kühlelements 4 entsteht an seiner Manteloberfläche 8 eine laminare Strömung, die es verhindert, dass der Folienschlauch 2 mit seiner Innenwandung die Manteloberfläche 8 berührt. Zwischen beiden verbleibt damit ein Spalt 7. Anders ausgedrückt bildet sich an der Manteloberfläche 8 des Kühlelements ein Luftpolster aus, welches den Folienschlauch 2 führt oder trägt. Der Spalt 7 zwischen Manteloberfläche und dem Folienschlauch 2 ist in den Figuren übertrieben dargestellt. Das Kühlelement 4 kann als ein einstückiger Körper ausgebildet sein. Da der Folienschlauch 2 rotationssymmetrisch zur Transportrichtung z ist, ist auch das Kühlelement rotationssymmetrisch ausgebildet. Wie aus der Fig. 1 zu entnehmen ist, weist der sichtbare Querschnitt des Kühlelements 4 die gleiche Form auf wie der Folienschlauch 2. In anderen Worten ausgedrückt hat der Spalt 7 eine konstante Dicke. Um eine verbesserte Kühlwirkung zu erzielen, können außerhalb des Folienschlauches 2 Blasluftdüsen 5 angeordnet sein. Es können mehrere Blasluftdüsen 5 um den Umfang des Folienschlauches 2 verteilt sein. Durch die Blasluftdüsen 5 können Blasluftströme, die in Richtung des Pfeils A verlaufen, auf den Außenumfang des Folienschlauches 2 gerichtet sein. Es können auch mehrere Blasluftdüsen 5 in Transportrichtung z des Folienschlauches 2 abfolgend angeordnet sein. Eine vorteilhafte Wirkung wird jedoch erzielt, wenn die Blasluftdüsen 5 die Außenwandung des Folienschlauchs an den Stellen mit Blasluft beaufschlagt, an denen die Innenwandung des Folienschlauchs durch das Kühlelement 4 geführt und/oder gekühlt wird.

Die Fig. 2 zeigt die schematische Seitenansicht einer weiteren Extrusionsvorrichtung, bei der ein Kühlelement 6 in Transportrichtung z des Folienschlauches 2 beabstandet zu dem Düsenkopf 3 angeordnet ist. In diesem Bereich verändert sich der Durchmesser des Folienschlauches 2 in Transportrichtung z nicht mehr, so dass das Kühlelement 6 zylinderförmig ausgebildet ist. Das dargestellte Kühlelement 6 ist zudem scheibenförmig, d. h., der Durchmesser des Kühlelements 6 ist größer als seine Ausdehnung in Transportrichtung z. Das Kühlelement 4 kann ebenfalls scheibenförmig ausgeprägt sein. Auch in dieser Ausführungsform können Blasluftdüsen 5 vorgesehen sein.

In der Figur 3 ist eine weitere Ausführungsform eines Kühlelements 6 dargestellt. Dieses Kühlelement ist innerhalb der Schlauchfolie 2 angeordnet. Das Kühlelement 6 ist auf nicht dargestellte Weise mit seinem Stator 10 am Blaskopf 3 befestigt. An seinem Außenumfang ist der Stator 10 mit einer Nut 11 versehen. Um den Stator 10 herum ist ein ringförmiger Rotor 9 angeordnet, der an seiner Innenoberfläche eine umlaufende Erhöhung 12 aufweist, welche in die Nut 11 greift. Die Erhöhung 12 wird durch eine geeignete Kraft, etwa eine magnetische Kraft, berührungsfrei in der Nut gehalten. Eine magnetische Kraft kann auch für den Antrieb des Rotors 9 sorgen, so dass dieser um den Stator 10 herum rotiert.
Es ist offensichtlich, dass die Ausführungsformen der Figuren 1, 2 und 3 miteinander kombiniert werden können.

| **Bezugszeichenliste** | |
|---|---|
| 1 | Extrusionsvorrichtung |
| 2 | Folienschlauch |
| 3 | Düsenkopf |
| 4 | Kühlelement |
| 5 | Blasluftdüse |
| 6 | Kühlelement |
| 7 | Spalt |
| 8 | Manteloberfläche |
| 9 | Rotor |
| 10 | Stator |
| 11 | Nut |
| 12 | Erhöhung |
| | |
| | |
| z | Transportrichtung des Folienschlauches 2 |
| ϕ | Drehrichtung des Kühlelements |
| A | Stromrichtung der Blasluft |

## Patentansprüche

1. Extrusionsvorrichtung (1) zur Extrusion eines Folienschlauches (2) in einer Bewegungsrichtung (z), welche (1) einen Düsenkopf (3) mit einem ringförmigen Spalt, aus welchem der Folienschlauch (2) austritt, umfasst und welche (1) eine Innenkühlvorrichtung (4) umfasst, mit welcher der extrudierte Folienschlauch (2) nach dessen Austreten aus dem ringförmigen Spalt von innen her kühlbar ist, wobei zumindest ein Kühlelement (4) vorgesehen ist, welches die gleiche Querschnittsform aufweist wie der Folienschlauch (2) und welches in der Bewegungsrichtung (z) des extrudierten Folienschlauches (2) eine Oberfläche aufweist, die bewegbar ist,
wobei das Kühlelement (4) Bestandteil eines Rotors (9) ist, welcher um einen Stator (10) rotiert, wobei der Rotor (9) berührungsfrei um den Stator (10) führbar ist, **dadurch gekennzeichnet, dass** der Rotor (9) durch den Stator (10) über magnetische Kräfte führbar und antreibbar ist.

2. Extrusionsvorrichtung (1) nach einem der vorstehenden Ansprüche,
**dadurch gekennzeichnet, dass**
das Kühlelement (6) rotationssymmetrisch ausgestaltet ist.

3. Extrusionsvorrichtung (1) nach einem der vorstehenden Ansprüche,
**dadurch gekennzeichnet, dass**
das Kühlelement (6) zylinderförmig ausgestaltet ist.

4. Extrusionsvorrichtung (1) nach einem der vorstehenden Ansprüche,
**dadurch gekennzeichnet, dass**
die Bewegungsrichtung (ϕ)der Oberfläche des Kühlelementes (6) parallel zur Innenoberfläche des Folienschlauches (2) und quer zur Transportrichtung (z) des Folienschlauches (2) verläuft.

5. Extrusionsvorrichtung (1) nach einem der vorstehenden Ansprüche,
**dadurch gekennzeichnet, dass**
das Kühlelement (6) temperierbar ist.

6. Extrusionsvorrichtung (1) nach dem vorstehenden Anspruch,
**dadurch gekennzeichnet, dass**
das zumindest eine Kühlelement (6) mit einem Fluid beaufschlagbar ist, mit welchem die Temperatur des Kühlelements (6) beeinflussbar ist.

7. Extrusionsvorrichtung (1) nach einem der vorstehenden Ansprüche,
**dadurch gekennzeichnet, dass**
die Oberfläche des Kühlelements (6) verchromt ist.

8. Extrusionsvorrichtung (1) nach einem der vorstehenden Ansprüche,
**dadurch gekennzeichnet, dass**
die Oberfläche des Kühlelements (6) eine Rautiefe von höchstens 0,5 Mikrometer aufweist.

9. Extrusionsvorrichtung (1) nach einem der vorstehenden Ansprüche,
**dadurch gekennzeichnet, dass**
die Oberfläche des Kühlelements (6) eine Rautiefe von höchstens 0,2 Mikrometer aufweist.

10. Extrusionsvorrichtung (1) nach einem der vorstehenden Ansprüche,
**dadurch gekennzeichnet, dass**
das zumindest einen Kühlelement (6) derart angelenkt ist, dass ein gasförmiges Fluid in Transportrichtung (z) des Folienschlauches (2) am Kühlelement (6) vorbei förderbar ist.

11. Extrusionsvorrichtung (1) nach einem der vorstehenden Ansprüche,
**dadurch gekennzeichnet, dass**
in Transportrichtung (z) des Folienschlauches (2) auf Höhe des zumindest einen Kühlmittels (6) eine Temperiervorrichtung (5) vorgesehen ist, mit welcher das Äußere des Folienschlauches (2) temperierbar ist.

12. Extrusionsvorrichtung (1) nach dem vorstehenden Anspruch,
**dadurch gekennzeichnet, dass**
mit der Temperiervorrichtung (5) das Äußere des Folienschlauches (2) mit einem temperierten Fluid beaufschlagbar ist.

13. Extrusionsvorrichtung (1) nach einem der vorstehenden Ansprüche,
**dadurch gekennzeichnet, dass**
das zumindest eine Kühlmittel (6) in Transportrichtung (z) des Folienschlauches (2) unmittelbar hinter dem ringförmigen Spalt angeordnet ist.

14. Verfahren zur Extrusion eines Folienschlauches (2) in einer Bewegungsrichtung (z), welcher (2) mit einer Innenkühlvorrichtung (4, 6) von innen her gekühlt wird, wobei zumindest ein Kühlelement (6) im Inneren des Folienschlauches bewegt wird,
wobei
das Kühlelement (6) Bestandteil eines Rotors (9) ist, welcher um einen Stator (10) rotiert, wobei der Rotor (9) berührungsfrei um den Stator (10) geführt wird **dadurch gekennzeichnet, dass** der Rotor (9) durch den Stator (10) über magnetische Kräfte geführt und angetrieben wird.

15. Verfahren nach Anspruch 14,
**dadurch gekennzeichnet, dass**
das zumindest eine Kühlelement (6) mit einer Geschwindigkeit von mindestens 1000 m/min bewegt wird.

16. Verfahren nach Anspruch 14,
**dadurch gekennzeichnet, dass**
das zumindest eine Kühlelement (6) mit einer Geschwindigkeit von mindestens 1500 m/min bewegt wird.

17. Verfahren nach Anspruch 14,
**dadurch gekennzeichnet, dass**
das zumindest eine Kühlelement (6) mit einer Geschwindigkeit von mindestens 2000 m/min bewegt wird.

## Claims

1. An extrusion device (1) for the extrusion of a film tube (2) in a movement direction (z), which (1) comprises a nozzle head (3) with an annular gap, from which the film tube (2) exits and which (1) comprises an internal cooling device (4), with which the extruded film tube (2) can be cooled from the inside after the exit thereof from the annular gap, wherein at least one cooling element (4) is provided, which has the same cross-sectional form as the film tube (2) and which has a surface in the movement direction (z) of the extruded film tube (2), which is movable,
wherein
the cooling element (4) is a component of a rotor (9), which rotates about a stator (10), wherein the rotor (9) can be guided without contact about the stator (10),
**characterized in that**
the rotor (9) can be guided and driven by the stator (10) by means of magnetic forces.

2. An extrusion device (1) according to one of the preceding claims,
**characterized in that**
the cooling element (6) is designed rotationally symmetrically.

3. An extrusion device (1) according to one of the preceding claims,
**characterized in that**
the cooling element (6) is designed cylindrically.

4. An extrusion device (1) according to one of the preceding claims,
**characterized in that**
the movement direction (ϕ) of the surface of the cooling element (6) runs in parallel to the inner surface of the film tube (2) and transversely to the transport direction (z) of the film tube (2).

5. An extrusion device (1) according to one of the preceding claims,
**characterized in that**
the cooling element (6) is able to be temperature-controlled.

6. An extrusion device (1) according to one of the preceding claims,
**characterized in that**
the at least one cooling element (6) can be acted upon with a fluid, with which the temperature of the cooling element (6) can be influenced.

7. An extrusion device (1) according to one of the preceding claims,
**characterized in that**
the surface of the cooling element (6) is chromium-plated.

8. An extrusion device (1) according to one of the preceding claims,
**characterized in that**
the surface of the cooling element (6) has a roughness depth of at most 0.5 micrometers.

9. An extrusion device (1) according to one of the preceding claims,
**characterized in that**
the surface of the cooling element (6) has a roughness depth of a most 0.2 micrometers.

10. An extrusion device (1) according to one of the preceding claims,
**characterized in that**
the at least one cooling element (6) is hinged in such a manner that a gaseous fluid can be conveyed in the transport direction (z) of the film tube (2) past the cooling element (6).

11. An extrusion device (1) according to one of the preceding claims,
**characterized in that**
in the transport direction (z) of the film tube (2) at the level of the at least one cooling agent (6) a temperature-control device (5) is provided, with which the outside of the film tube (2) can be temperature-controlled.

12. An extrusion device (1) according to the preceding claim,
**characterized in that**
with the temperature-control device (5) the outside of the film tube (2) can be acted upon with a temperature-control fluid.

13. An extrusion device (1) according to one of the preceding claims,
**characterized in that**
the at least one cooling agent (6) is arranged in the transport direction (z) of the film tube (2) directly behind the annular gap.

14. A method for the extrusion of a film tube (2) in a movement direction (z), which (2) is cooled from the inside with an internal cooling device (4, 6), wherein at least one cooling element (6) is moved in the interior of the film tube,
wherein
the cooling element (6) is a component of the rotor (9), which rotates about a stator, wherein the rotor (9) is guided without contact about the stator (10), **characterized in that**
the rotor (9) is guided and driven by the stator (10) by means of magnetic forces.

15. A method according to Claim 14,
**characterized in that**
the at least one cooling element (6) is moved with a speed of at least 1000 m/min.

16. A method according to Claim 14,
**characterized in that**
the at least one cooling element (6) is moved with a speed of at least 1500 m/min.

17. A method according to Claim 14,
**characterized in that**
the at least one cooling element (6) is moved with a speed of at least 2000 m/min.

## Revendications

1. Dispositif d'extrusion (1) pour l'extrusion d'un film tubulaire (2) dans une direction de déplacement (z), lequel (1) comprend une tête de buse (3) avec un interstice annulaire, d'où sort le film tubulaire (2) et lequel (1) comprend un dispositif de refroidissement interne (4), avec lequel le film tubulaire extrudé (2) peut être refroidi après sa sortie de l'interstice annulaire, au moins un élément de refroidissement (4) étant prévu, qui présente la même forme de section que le film tubulaire (2) et qui comprend, dans la direction de déplacement (z) du film tubulaire extrudé (2), une surface qui est mobile,
l'élément de refroidissement (4) faisant partie d'un rotor (9) qui tourne autour d'un stator (10), le rotor (9) pouvant être guidé sans contact autour du stator (10),
**caractérisé en ce que**
le rotor (9) peut être guidé et entraîné par le stator (10) par l'intermédiaire de forces magnétiques.

2. Dispositif d'extrusion (1) selon l'une des revendications précédentes,
**caractérisé en ce que**
l'élément de refroidissement (6) présente une forme à symétrie de rotation.

3. Dispositif d'extrusion (1) selon l'une des revendications précédentes,
**caractérisé en ce que**
l'élément de refroidissement (6) présente une forme cylindrique.

4. Dispositif d'extrusion (1) selon l'une des revendications précédentes,
**caractérisé en ce que**
la direction de déplacement (ϕ)de la surface de l'élément de refroidissement (6) s'étend parallèlement à la surface interne du film tubulaire (2) et transversalement par rapport à la direction de transport (z) du film tubulaire (2).

5. Dispositif d'extrusion (1) selon l'une des revendications précédentes,
**caractérisé en ce que**
l'élément de refroidissement (6) peut être tempéré.

6. Dispositif d'extrusion (1) selon la revendication précédente,
**caractérisé en ce que**
l'au moins un élément de refroidissement (6) peut être alimenté avec un fluide avec lequel la température de l'élément de refroidissement (6) peut être contrôlée.

7. Dispositif d'extrusion (1) selon l'une des revendications précédentes,
**caractérisé en ce que**
la surface de l'élément de refroidissement (6) est chromée.

8. Dispositif d'extrusion (1) selon l'une des revendications précédentes,
**caractérisé en ce que**
la surface de l'élément de refroidissement (6) présente une profondeur de rugosité maximale de 0,5 micromètres.

9. Dispositif d'extrusion (1) selon l'une des revendications précédentes,
**caractérisé en ce que**
la surface de l'élément de refroidissement (6) présente une profondeur de rugosité maximale de 0,2 micromètres.

10. Dispositif d'extrusion (1) selon l'une des revendications précédentes,
**caractérisé en ce que**
l'au moins un élément de refroidissement (6) est articulé de façon à ce qu'un fluide gazeux puisse être transporté dans la direction de transport (z) du film tubulaire (2) le long de l'élément de refroidissement (6).

11. Dispositif d'extrusion (1) selon l'une des revendications précédentes,
**caractérisé en ce que**
dans la direction de transport (z) du film tubulaire (2), à la hauteur de l'au moins un moyen de refroidissement (6), se trouve un dispositif de régulation de température (5) avec lequel l'extérieur du film tubulaire peut être tempéré.

12. Dispositif d'extrusion (1) selon la revendication précédente,
**caractérisé en ce que**
le dispositif de régulation de température (5) permet d'alimenter l'extérieur du film tubulaire (2) avec un fluide tempéré.

13. Dispositif d'extrusion (1) selon l'une des revendications précédentes,
**caractérisé en ce que**
l'au moins un moyen de refroidissement (6) est disposé, dans la direction de transport (z) du film tubulaire (2), directement derrière l'interstice annulaire.

14. Procédé d'extrusion d'un film tubulaire (2) dans une direction de déplacement (z), lequel (2) étant refroidi avec un dispositif de refroidissement interne (4, 6) de l'extérieur, au moins un élément de refroidissement (6) étant déplacé à l'intérieur du film tubulaire,
l'élément de refroidissement (6) faisant partie d'un rotor (9) qui tourne autour d'un stator (10), le rotor (9) étant guidé sans contact autour du stator (10),
**caractérisé en ce que**
le rotor (9) est guidé et entraîné par le stator (10) par l'intermédiaire de forces magnétiques.

15. Procédé selon la revendication 14,
**caractérisé en ce que**
l'au moins un élément de refroidissement (6) est déplacé avec une vitesse d'au moins 1000 m/min.

16. Procédé selon la revendication 14,
**caractérisé en ce que**
l'au moins un élément de refroidissement (6) est déplacé avec une vitesse d'au moins 1500 m/min.

17. Procédé selon la revendication 14,
**caractérisé en ce que**
l'au moins un élément de refroidissement (6) est déplacé avec une vitesse d'au moins 2000 m/min.
